# EUROPEAN PATENT SPECIFICATION

(11) **EP 2 828 624 B1**
(45) Date of publication and mention of the grant of the patent: **27.05.2020**
(21) Application number: 12716659.3
(22) Date of filing: 20.03.2012
(51) Int. Cl.: G01F 1/704, G01F 15/06

(54) **METHOD AND SYSTEM FOR STAMPING AND MARKING FLUID IN A PIPE NETWORK FOR SMART MONITORING SYSTEMS**
VERFAHREN UND SYSTEM FÜR STEMPEL- UND MARKIERUNGSFLÜSSIGKEIT IN EINEM LEITUNGSNETZ FÜR INTELLIGENTE ÜBERWACHUNGSSYSTEME
PROCÉDÉ ET SYSTÈME POUR REPÉRER ET MARQUER UN FLUIDE DANS UN RÉSEAU DE CANALISATIONS POUR SYSTÈMES DE SURVEILLANCE INTELLIGENTS

(43) Date of publication of application: 28.01.2015
(73) Proprietor: WATERSIGN LTD., Yavne, 8122450 (IL)
(72) Inventor: RAHAMIM , Dan Dayan, 44805 Nirit (IL)
(74) Representative: Harrison IP Limited
(86) International application number: PCT/IL2012/050097
(87) International publication number: WO 2012/127470

(56) References cited:
- WO-A1-96/15427
- US-A- 3 523 454
- US-A- 3 776 033
- US-A1- 2008 109 175
- US-A1- 2008 282 808

## Description

### FIELD

This invention relates to systems and methods for monitoring activity of a fluid such as water or gas.

### BACKGROUND

Consumption by an end user of various substances such as water or gas is commonly monitored using a flow meter that is installed for each individual customer on their respective supply line. In many cases, meter readings are collected manually. Manually meter reading is labor intensive, and expensive. As a result, electronic meters have been introduced to allow for quicker, more efficient, and more accurate collection of consumption data. The electronic meters measure usage by monitoring flow through a conventional, mechanical meter. The usage readings are stored electronically and then transmitted via radio signals to a central station for processing.

US Patent No. 7,504,964 to Brennan et al, for example discloses a measuring meter system that includes a meter that monitors usage of a distribution system, an electronic data recorder that processes data from the meter, and an external unit that controls the processing of data in the electronic data recorder with a communication protocol.

US Patent No. 7,508,318 to Casella et al discloses an apparatus for measuring and storing flow information for a fluid flowing through each of a plurality of meters in a single unit in a multi-unit structure. Each meter operates independently of the other meters. Also discloses is wireless transmission of the flow information with a unique identifier associated with each meter.

US Patent No. 7,920,983 to Peleg et al discloses a computerized method for monitoring a water utility network. The method includes receiving meter data representing parameters measured by the meters, such as flow, pressure, of the water being distributed through the pipes. The method also includes receiving secondary data from sources external to the meters and representing conditions affecting consumption of water in a region serviced by the water utility network such as weather and holidays. The meter and secondary data are analyzed using statistical techniques to identify water network events including leakage events and other events regarding quantity and quality of water flowing through the pipes and operation of the water network. The events are reported to users via a user interface.

US Patent Publication No. 20100313958 of Patel et al. discloses a system and method for sensing events affecting liquid flow in a liquid distribution system. Pressure transients in a liquid within a liquid distribution system are detected using a single sensor and the detected transients are used to detect the opening and closing of valves at specific fixtures. The sensor can be coupled to a faucet bib and transmits an output signal to a computing device. Each such event is identified by the device by comparing characteristic features of the pressure transient waveform with previously observed characteristic features for events in the system. These characteristic features are used to determine the specific fixture where a valve open or close event has occurred. Flow to each fixture and leaks in the system can also be determined from the pressure transient signal.

US Patent Publication No. 20080109175 of Michalak discloses a method of monitoring the movement of fluid through a fluid distribution network. The introduction of an additive to fluid is controlled at a control point in a fluid distribution network, and a concentration pulse in a concentration of the additive in the fluid is generated. Amounts of the additive are measured as a function of time using a plurality of sensor units located at identified locations in the fluid distribution network over a geographic area, wherein the sensor units communicate with one or more communication networks. Measurement data corresponding to measured amounts of the additive is received from the sensor units with a computer system, and the measurement data is processed with the computer system to generate information indicative of movement of fluid in the fluid distribution network.

US Patent Publication No. 3,776,033 of Herzl discloses a vortex-type mass flowmeter for measuring the mass of fluid passing through a flow tube as well as the density thereof. A bluff body, swirl blades or other means disposed within the tube acts to create a pulsatory fluidic vortex therein whose frequency varies as a function of the volumetric flow rate of the fluid being measured. Placed within the flow tube is a pressure-responsive transducer adapted to generate an electrical signal whose frequency is proportional to the fluidic pulse rate and whose amplitude is a function of the kinetic energy contained in the vortex. The transducer signal is processed by an operational amplifier, the gain of which is inversely proportional to frequency, thereby effectively dividing the transducer signal by frequency throughout the operating range of the meter to yield an output signal whose amplitude is indicative of mass flow. By additionally dividing this output signal by frequency with a second amplifier having a gain which is inversely proportional to frequency, a signal indicative of the fluid density is produced.

### GENERAL DESCRIPTION

The present invention provides, in a first aspect, a system, and in a second aspect, a method for monitoring pressure or flow in a fluid delivery pipe network. The pipe network may conduct any fluid, such as water or gas. The technology provided by the invention may applied to any pipe network such as a pipe network that is part of a municipal distribution system, or an agricultural irrigation system, in which case, the pipe system may span a large geographical area. Alternatively, the technology provided by the invention may be applied to a pipe network that is confined to a single building such as a residential building, industrial plant, or a commercial establishment.

In its first aspect, the system of the invention comprises two or more markers adapted for installation at different marking locations along the pipe network, wherein each marker generates a different alteration in one or both of an initial fluid flow rate and an initial fluid pressure at the different marking locations of the marker in the pipe network, the alteration being characterized by one or more predetermined parameters, the values of the one or more parameters being indicative of one or both of the initial fluid flow and the initial fluid pressure at said marking location; wherein the alteration generated in the initial flow rate or pressure is selected from a frequency modulated wave, an amplitude modulated wave, or a phase modulated wave; wherein each of said plurality of markers is activated by one of the following:
**i)** an integral energy source;
**ii)** a fluid pressure in the pipe network;
**iii)** a fluid flow in the pipe network.

The system further comprises one or more sensors adapted to detect one or both of a fluid pressure or a fluid flow rate at one or more sensing locations in the pipe network and to generate a time dependent signal indicative of one or both of the fluid pressure and the fluid flow rate at the sensing location of the sensor.

The system also comprises a processor configured to analyze the signal generated by each of one or more of the sensors and to identify the marker locations of origin of the signals detected by each one or more of the sensors to determine one or both of the initial fluid flow rate and initial fluid pressure at one or more of the marking locations.

One or more of the markers may comprise, for example, a solenoid valve and a processor which regulates the solenoid valve according to a predetermined pattern. As another example, one or more of the markers may comprise a vane-wheel having a plurality of vanes extending from an axis and a pawl engaging each vane as the vane passes the pawl. As yet another example, one or more of the markers may comprise a spring biased piston inside a housing, the piston executing a reciprocating motion driven by the flow rate or the fluid pressure.

The processor may include a memory that stores an identifier of the alteration generated by each of the markers, and the processor may be further configured to identify a marker of origin of a signal detected by a sensor. The processor may also be configured to deconvolute a signal detected by a sensor into two or more fundamental signals, each fundamental signal being generated by a different marker. The processor may also monitor a flow rate at one or more of the markers over a time period and to calculate a fluid consumption at each marker over the time period.

In its second aspect, the invention provides a method for determining fluid flow in a fluid pipe network comprising:
**(a)** providing two or more markers adapted for installation at different marking locations along the pipe network, wherein each of said plurality of markers is activated by one of the following:
   **i)** an integral energy source;
   **ii)** a fluid pressure in the pipe network;
   **iii)** a fluid flow in the pipe network;
**(b)** generating an alteration in one or both of an initial fluid flow and an initial fluid pressure at the different marking locations in the pipe network, wherein the different alteration in one or both of the initial fluid flow and the initial fluid pressure at the different marking location, wherein the alteration generated in the initial flow rate or pressure is selected from a frequency modulated wave, an amplitude modulated wave, or a phase modulated wave;
**(c)** detecting one or both of a fluid pressure or a fluid flow rate at one or more sensing locations in the pipe network and generating a time dependent signal indicative of one or both of the fluid pressure and the fluid flow rate at the sensing location of the sensor; and
**(d)** analyzing the signal generated by one or more of the sensors, identifying the location of the marker locations of the origin of the signals detected by each of one or more of the sensors determining one or both of the initial fluid flow rate and initial fluid pressure at the marking locations.

In the method of the invention, the alteration generated in the initial flow rate or pressure may be selected from a frequency modulated wave, an amplitude modulated wave, and a phase modulated wave.

The method may comprise generating an alteration in one or both of an initial fluid flow and an initial fluid pressure at two or more marking locations, wherein a different alteration in one or both of the initial fluid flow and the initial fluid pressure is generated at different marking locations. In this case, the method may further comprise identifying a marker location of origin of a signal detected by a sensor. The method may also comprise deconvoluting a detected signal into two or more fundamental signals, each fundamental signal originating at a different marker location. The method may also include monitoring a flow rate at one or more of the markers over a time period and calculating a fluid consumption at each marker over the time period.

### BRIEF DESCRIPTION OF THE DRAWINGS

In order to understand the disclosure and to see how it may be carried out in practice, embodiments will now be described, by way of non-limiting example only, with reference to the accompanying drawings, in which:
**Fig. 1** shows a system for monitoring consumption of a fluid at one or more terminal locations in a pipe network;
**Fig. 2** shows an active marker for use in the system of Fig. 1;
**Fig. 3** shows a passive marker for use in the system of Fig. 1; and
**Fig. 4** shows an example of a signal generated by a sensor in one embodiment of the invention.

### DETAILED DESCRIPTION OF EMBODIMENTS

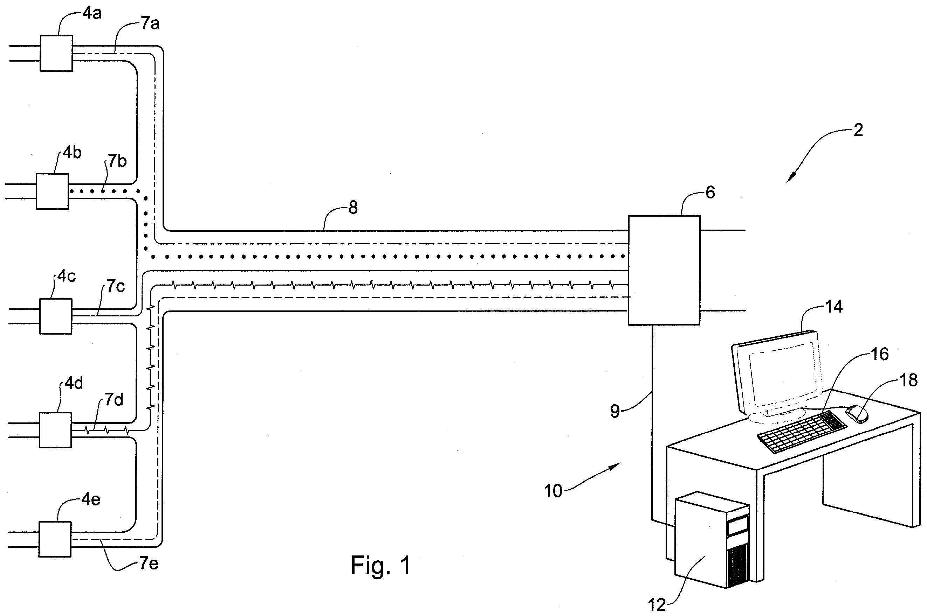

Fig. 1 shows a system **2** for monitoring pressure or flow in a fluid delivery pipe network **8.** The pipe network **8** may conduct any fluid, such as water or gas. The pipe network **8** may be, for example, part of a municipal distribution system, in which case, the pipe system may span a large geographical area. Alternatively, the pipe network **8** may be confined to a single building. Some of the pipes in the pipe network **8** may be buried under ground or concealed in a wall.

The system **2** comprises one or more markers **4.** Five markers **4a, 4b, 4c, 4d,** and **4e** are shown in Fig. 1. This is by way of example only, and the system **2** may comprises any number of markers **4** as required in any application. The markers **4** are distributed at various marking locations along the pipe network **8.** Each marker **4** is adapted to generate an alteration in one or both of an initial fluid flow and an initial fluid pressure at the marking location of the marker. The alteration is characterized by one or more parameters, and the values of the one or more parameters are indicative of one or both of the initial fluid flow and the initial fluid pressure at the marking location of the marker. The in the initial flow rate or pressure may be, for example, a frequency modulated wave, an amplitude modulated wave, or a phase modulated wave.

The system **2** further comprises one or more sensors **6** that are configured to sense one or both of a fluid pressure or fluid flow at one or more sensing locations in the pipe network **8,** and to generate a time dependent signal indicative of the sensed fluid pressure or flow at the sensing location of the sensor. An alteration in the fluid flow rate or fluid pressure induced by any one of the markers **4** at a marker location is manifested in a corresponding alteration the fluid flow rate or fluid pressure at one or more of the sensing locations. The fluid in the pipe network thus serves as a carrier medium for conducting a signal indicative of the flow rate or fluid pressure from a marker **4** to a sensor **6.** Conduction of this signal utilizes the energy imparted to the fluid by the pumping system of the pipe network. The one or more sensors **6** are connected to a monitoring station **10** that may include a processor **12,** a display screen **14** and one or more user input devices such as a keyboard **16** or a computer mouse **18.** Signals generated by the one or more sensors **6** are input to the processor **12** over a connection **9** that may be a wired connection or a wireless connection. The processor **12** is configured to process the signals generated by the sensors **6** to determine an initial flow rate at one or more of the marking locations on the markers **4.** The processor may further be configured to monitor one or both of the flow rate or fluid pressure over a time period in order to determined fluid consumption at each of the one or more markers. The results of the processing may be displayed on the screen **14.**

The markers **4** are adapted to be installed on a pipe in the pipe network **8.** One or more of the markers **4** may be active markers that are activated by an external energy source. Additionally or alternatively, one or more of the markers **4** may be passive markers that are activated by the kinetic energy of the fluid flow at the marking location.

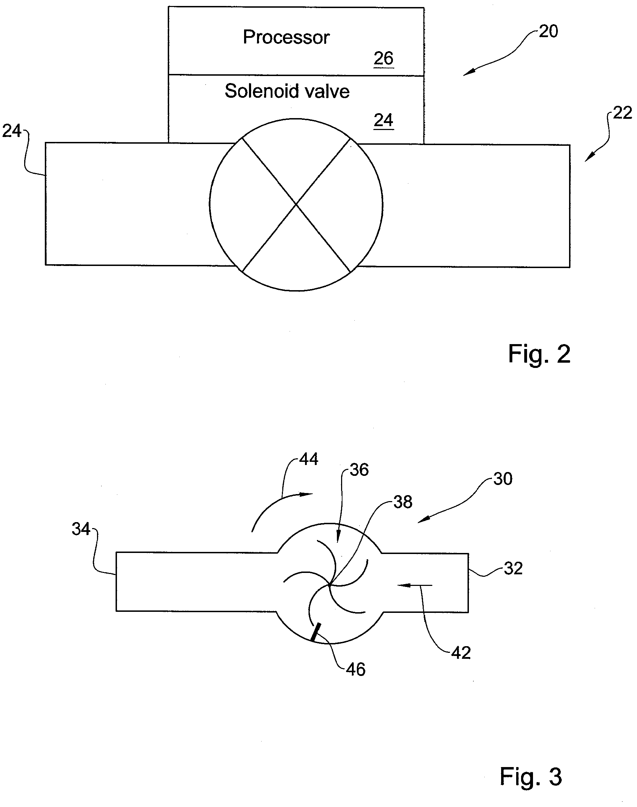

Fig. 2 shows an active marker **20** that may be used for the marker **4,** in accordance with one embodiment of the invention. The marker **20** is adapted for installation into a pipeline of the pipe network by means of ports **22** and **24** that may be threaded for attachment to a pipe in the network. The marker **20** comprises a solenoid valve **24** that is adapted to regulate the flow of fluid through the marker between the ports **22** and **24.** The solenoid valve **24** is under the control of a programmable processor **26** which regulates the position of the solenoid valve **24** according to a predetermined pattern, and hence alters one or both of the initial fluid flow rate or fluid pressure of the fluid at the location of the marker in the pipe network. As demonstrated below, a predetermined fixed cyclical variation in the opening of the solenoid valve induces an alteration in the initial flow rate and or fluid pressure that is dependent upon one or both of the initial flow rate or fluid pressure.

Fig. 3 shows a passive marker **30** that may be used for the marker **4,** in accordance with another embodiment of the invention. The marker **30** is adapted for insertion into a pipeline of the pipe network by means of ports **32** and **34** that may be threaded for attachment to a pipe in the network. The marker **30** comprises a vane-wheel **36** that rotates about an axis **38.** A plurality of curved vanes **40** extend from the axis. Flow of fluid through the marker **30** in the direction of the arrow **42** causes the vane-wheel to rotate in the direction of the arrow **44.** A pawl **46** extending from the luminal wall of the marker **30** engages each vane as the vane passes the pawl **46.** The momentary interaction between the pawl **46** and a vane **40** causes a momentary retardation of the rotation velocity the vane-wheel **36,** resulting in an oscillating rotational velocity of the vane-wheel, which introduces a cyclical variation in one or both of the initial fluid pressure and flow rate. The parameters of the alteration can be selected by appropriate selection of the number of vanes **40,** the elasticity of the vanes **40** and the length of the pawl **46.**

In another embodiment of the marker **4** (not shown), a passive marker comprises a spring loaded piston that executes a reciprocating motion inside a housing driven by the fluid pressure. The reciprocating motion of the piston introduces a cyclical variation in one or both of the initial fluid pressure and flow rate. The parameters of the alteration can be selected by appropriate selection of the characteristics of the spring and the geometry of the housing.

Referring again to Fig. 1, the system **2** may be used for monitoring fluid usage and/or consumption at a plurality of terminal locations in the pipe network **8.** The markers **4** are installed at different marking locations along a pipe network. Each marker **4** is configured to generate a unique alteration in the initial flow rate or fluid pressure. For example, each marker **4** may be configured to generate an alteration in the initial flow rate having a unique frequency, or phase. The alteration generated by each marker **4** is transmitted through the fluid in the pipe network as a signal **7** having one or more unique features. Thus, each of the signals **7a** to **7e** generated by the markers **4a** to **4e,** respectively, has a unique feature. This unique feature thus serves as an identifier or signature of the marker that generated the alteration in the flow rate or fluid pressure. The processor **12** includes a memory that stores the identifier of the alteration generated by each of the markers, so that when a wave is detected by a sensor **6,** the marker which generated the wave can be determined by the processor **12.** When two or more of the markers **4** are active simultaneously, the signal received by the sensor **6** is a weighted sum of the transmitted signals. In this case, the processor **12** may be configured to deconvolute the detected signal into two or more fundamental signals, where each fundamental signal was generated by a different marker. The decovolution may involve, for example, performing multiple band pass filtering or Fourier transformation. The processor then determines a flow rate at each of the marker locations from the alteration detected in each fundamental signal. The processor may further monitor one or both of the flow rate or fluid pressure over a time period at each of the markers in order to determine fluid consumption at each of the markers, for example, by integrating the flow rate at each marker over the time period. The processor may also be configured to compare the signals obtained by two or more sensors located at different sensing locations in order to detect and locate irregular activity in the pipe network, such as leaks, burst pipes, and blocked pipes.

### Example

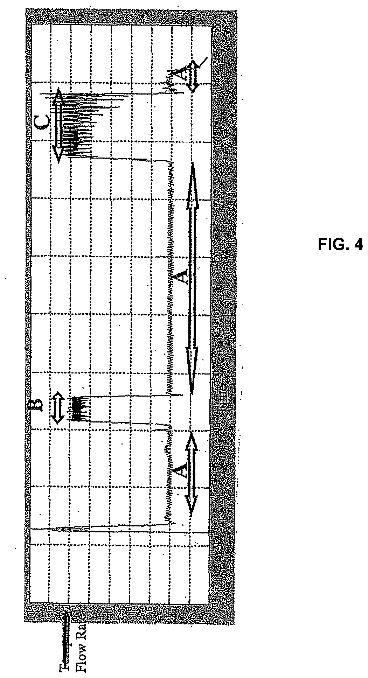

A marker of the type shown in Fig. 3 was installed on a water pipe in a water distribution pipe network. When the marker was activated, the solenoid valve 24 of the marker was made to execute a cyclical pattern of opening and closing having a frequency of about 1 Hz. A sensor comprising flow meter was placed downstream from the marker. Fig. 4 shows the signal generated by the sensor over a time period of about 3 minutes. Time intervals labeled **A** are time intervals during which no water was flowing in the pipe adjacent to the marker and the marker was inactive (the pipe remained completely open during this time interval). The signal generated by the sensor during the time intervals **A** thus represents the baseline signal in the absence of flow and in the absence of activity of the marker. During the time interval labeled **B,** water was allowed to flow through the pipe adjacent to the marker with the marker inactive (the pipe remained completely open during this time interval). The signal generated by the sensor during the time interval **B** thus represents the initial flow rate at the location of the marker. During the time interval labeled **C,** water was allowed to flow through the pipe adjacent to the marker while the marker was activated. The signal detected by the sensor during the time interval **C** has an AC component having the frequency of the marker and an amplitude that can be correlated with the water flow rate and water pressure at the marker location. Thus, the AC component of the signal recorded during the time interval C reveals the identity of the marker and the initial flow rate or water pressure at the marker location.

## Claims

1. A system for determining fluid flow in a fluid pipe network comprising:
**(a)** two or more markers (4) adapted for installation at different marking locations along the pipe network (8), wherein each marker (4) is adapted to generate a different alteration in one or both of an initial fluid flow rate and an initial fluid pressure at the different marking locations of the marker (4) in the pipe network (8), the alteration being **characterized by** one or more predetermined parameters, the values of the one or more parameters being indicative of one or both of the initial fluid flow rate and the initial fluid pressure at said marking location; wherein the alteration generated in the initial flow rate or pressure is selected from a frequency modulated wave, an amplitude modulated wave, or a phase modulated wave; wherein each of said two or more markers (4) is activated by one of the following:
**i)** an integral energy source;
**ii)** a fluid pressure in the pipe network;
**iii)** a fluid flow in the pipe network;
**(b)** one or more sensors (6) adapted to detect one or both of a fluid pressure or a fluid flow rate at one or more sensing locations in the pipe network (8) and to generate a time dependent signal indicative of one or both of the fluid pressure and the fluid flow rate at the sensing location of the sensor (6); and (c) a processor (12) configured to analyze the signal generated by each of one or more of the sensors (6) and to identify the marker locations of origin of the signals detected by each of the one or more sensors (6) to determine one or both of the initial fluid flow rate and initial fluid pressure at one or more of the marking locations.

2. The system according to claim 1 wherein one or more of the markers (4) comprises a solenoid valve (24) and a processor (26) which regulates the solenoid valve according to a predetermined pattern.

3. The system according to claim 1 wherein one or more of the markers (4) comprises a vane-wheel (36) having a plurality of vanes (40) extending from an axis and a pawl (46) engaging each vane (40) as the vane (40) passes the pawl (46).

4. The system according to claim 1 wherein one or more of the markers (4) comprises a spring biased piston inside a housing, the piston executing a reciprocating motion driven by the flow rate or the fluid pressure.

5. The system according to claim 1 wherein the processor (12) includes a memory that stores an identifier of the alteration generated by each of the markers (4), and the processor (12) is further configured to identify a marker of origin of the signal detected by the sensor (6).

6. The system according to claim 5 wherein the processor (12) is further configured to deconvolute the signal detected by the sensor (6) into two or more fundamental signals, each fundamental signal being generated by a different marker (4).

7. The system according to claim 1 wherein the processor (12) is further configured to monitor the flow rate at one or more of the markers (4) over a time period.

8. A method for determining fluid flow in a fluid pipe network comprising:
**(a)** providing two or more markers (6) adapted for installation at different marking locations along the pipe network, wherein each of said two or more markers is activated by one of the following:
**i)** an integral energy source;
**ii)** a fluid pressure in the pipe network;
**iii)** a fluid flow in the pipe network;
**(b)** generating an alteration in one or both of an initial fluid flow and an initial fluid pressure at the different marking locations in the pipe network, wherein the different alteration in one or both of the initial fluid flow rate and the initial fluid pressure at the different marking location, wherein the alteration generated in the initial flow rate or pressure is selected from a frequency modulated wave, an amplitude modulated wave, or a phase modulated wave;
**(c)** detecting one or both of a fluid pressure or a fluid flow rate at one or more sensing locations in the pipe network, with at least one or more sensors (6), and generating a time dependent signal indicative of one or both of the fluid pressure and the fluid flow rate at the sensing location of the sensor; and
**(d)** analyzing the signal generated by one or more of the sensors, identifying the marker locations of the origin of the signals detected by each of the one or more sensors and determining one or both of the initial fluid flow rate and initial fluid pressure at the marking locations.

9. The method according to claim 8 comprising generating an alteration in one or both of an initial fluid flow and an initial fluid pressure at two or more marking locations, wherein a different alteration in one or both of the initial fluid flow and the initial fluid pressure is generated at different marking locations.

10. The method according to claim 9 further comprising identifying a marker location of origin of a signal detected by a sensor.

11. The method according to claim 10 further comprising deconvoluting a detected signal into two or more fundamental signals, fundamental signal originating at a different marker location.

12. The method according to claim 11 further comprising monitoring a flow rate at one or more of the markers over a time period and calculating a fluid consumption at each marker over the time period.

## Patentansprüche

1. System zur Bestimmung der Fluidströmung in einem Fluidrohrnetz, umfassend:
(a) zwei oder mehr Marker (4), die an verschiedenen Markierungsstellen entlang des Rohrnetzes (8) installiert werden können, wobei jeder Marker (4) eine andere Änderung eines oder beider der folgenden erzeugen kann: einer ursprünglichen Fluidströmungsrate und eines ursprünglichen Fluiddrucks an den verschiedenen Markierungsstellen des Markers (4) in dem Rohrnetz (8), wobei die Änderung durch einen oder mehrere vorbestimmte Parameter gekennzeichnet ist, wobei die Werte des einen oder der mehreren Parameter einen oder beide der ursprünglichen Fluidströmungsrate und des ursprünglichen Drucks an der Markierungsstelle anzeigen; wobei die erzeugte Änderung der ursprünglichen Fluidströmungsrate oder des Drucks ausgewählt ist aus einer frequenzmodulierten Welle, einer amplitudenmodulierten Welle oder einer phasenmodulierten Welle, wobei jeder der zwei oder mehr Marker (4) durch eines der folgenden aktiviert wird:
i) eine integrale Energiequelle;
ii) einen Fluiddruck in dem Rohrnetz;
iii) eine Fluidströmung in dem Rohrnetz;
(b) einen oder mehrere Sensoren (6), die eines oder beide eines Fluiddrucks oder einer Fluidströmungsrate an einer oder mehreren Messstellen in dem Rohrnetz (8) erkennen können, und die ein zeitabhängiges Signal erzeugen können, das den Fluiddruck und/oder die Fluidströmungsrate an der Messstelle des Sensors (6) anzeigen kann; und
(c) einen Prozessor (12), der so gestaltet ist, dass er das durch jeden des einen oder der mehreren Sensoren (6) erzeugte Signal analysieren und die Markerstellen des Ursprungs der durch jeden des einen oder der mehreren Sensoren (6) erkannten Signale identifizieren kann, um die ursprüngliche Fluidströmungsrate und/oder den ursprünglichen Fluiddruck an einer oder mehreren der Markierungsstellen zu bestimmen.

2. System nach Anspruch 1, wobei einer oder mehrere der Marker (4) ein Solenoidvenil (24) und einen Prozessor (26), der das Solenoidventil gemäß einem vorbestimmten Muster regelt, umfasst.

3. System nach Anspruch 1, wobei einer oder mehrere der Marker (4) ein Flügelrad (36) mit einer Mehrzahl von Flügeln (40) umfasst, die sich von einer Achse erstrecken, und mit einer Klinke (46), die mit jedem Flügel (40) eingreift, wenn der Flügel (40) die Klinke (46) passiert.

4. System nach Anspruch 1, wobei einer oder mehrere der Marker (4) einen federvorbelasteten Kolben in einem Gehäuse umfasst, wobei der Kolben eine durch die Strömungsrate oder den Fluiddruck gesteuerte Kolbenbewegung ausführt.

5. System nach Anspruch 1, wobei der Prozessor (12) einen Speicher aufweist, der eine Kennung der durch jeden der Marker (4) erzeugten Änderung speichert, und wobei der Prozessor (12) ferner so gestaltet ist, dass er einen Marker des Ursprungs des durch den Sensor (6) erkannten Signals identifiziert.

6. System nach Anspruch 5, wobei der Prozessor (12) ferner so gestaltet ist, dass er das durch den Sensor (6) erkannte Signal in zwei oder mehr Grundsignale entfaltet, wobei jedes Grundsignal durch einen anderen Marker (4) erzeugt wird.

7. System nach Anspruch 1, wobei der Prozessor (12) ferner so gestaltet ist, dass er die Strömungsrate an einem oder mehreren der Marker (4) über einen Zeitraum überwacht.

8. Verfahren zur Bestimmung der Fluidströmung in einem Fluidrohrnetz, umfassend:
(a) Bereitstellen von zwei oder mehr Markern (6), die an verschiedenen Markierungsstellen entlang des Rohrnetzes installiert werden können, wobei jeder der zwei oder mehr Marker durch eines der folgenden aktiviert wird:
i) eine integrale Energiequelle;
ii) einen Fluiddruck in dem Rohrnetz;
iii) eine Fluidströmung in dem Rohrnetz;
(b) Erzeugen einer Änderung eines oder beider der folgenden: einer ursprünglichen Fluidströmungsrate und eines ursprünglichen Fluiddrucks an den verschiedenen Markierungsstellen in dem Rohrnetz, wobei die erzeugte Änderung der ursprünglichen Fluidströmungsrate oder des Drucks ausgewählt ist aus einer frequenzmodulierten Welle, einer amplitudenmodulierten Welle oder einer phasenmodulierten Welle;
(c) Erkennen eines oder beider eines Fluiddrucks oder einer Fluidströmungsrate an einer oder mehreren Messstellen in dem Rohrnetz, wobei mindestens ein oder mehrere Sensoren (6) ein zeitabhängiges Signal erzeugen, das den Fluiddruck und/oder die Fluidströmungsrate an der Messstelle des Sensors anzeigt; und
(d) Analysieren des durch einen oder mehrere der Sensoren erzeugten Signals, Identifizieren der Markerstellen des Ursprungs der durch jeden des einen oder der mehreren Sensoren erkannten Signale, und Bestimmen der ursprünglichen Fluidströmungsrate und/oder des ursprünglichen Fluiddrucks an den Markierungsstellen.

9. Verfahren nach Anspruch 8, umfassend das Erzeugen einer Änderung einer ursprünglichen Fluidströmung und/oder eines ursprünglichen Fluiddrucks an zwei oder mehr Markierungsstellen, wobei eine andere Änderung der ursprünglichen Fluidströmung und/oder des ursprünglichen Fluiddrucks an unterschiedlichen Markierungsstellen erzeugt wird.

10. Verfahren nach Anspruch 9, ferner umfassend das Identifizieren einer Markerstelle eines Ursprungs eines durch einen Sensor erkannten Signals.

11. Verfahren nach Anspruch 10, ferner umfassend das Entfalten eines erkannten Signals in zwei oder mehr Grundsignale, wobei das Grundsignal an einer anderen Markerstelle seinen Ursprung hat.

12. Verfahren nach Anspruch 11, ferner umfassend das Überwachen einer Strömungsrate an einem oder mehreren der Marker über einen Zeitraum und das Berechnen eines Fluidverbrauchs an jedem Marker über den Zeitraum.

## Revendications

1. Système de détermination du débit dans un réseau de canalisations de fluide, comprenant :
(a) deux ou plusieurs repères (4) adaptés pour être installés dans différents emplacements le long du réseau de canalisations (8), chaque repère (4) étant adapté pour générer une modification diverse dans un du débit initial du fluide et de la pression initiale du fluide, ou des deux, aux différents emplacements de marquage du repère (4) dans le réseau de canalisations (8), la modification étant **caractérisée par** un ou plusieurs paramètres prédéterminés, les valeurs de l'un ou plusieurs paramètres étant indicatives d'un des suivants : débit initial du fluide et pression initiale du fluide, ou des deux, audit emplacement du repère ;
la modification générée dans le débit ou la pression initiaux étant sélectionnée parmi les suivantes : une onde modulée en fréquence, une onde modulée en amplitude, ou une onde modulée en phase ;
chacun desdits deux ou plusieurs repères (4) étant activé par un des suivants :
i) une source d'énergie intégrale ;
ii) une pression de fluide dans le réseau de canalisations ;
iii) un débit de fluide dans le réseau de canalisations ;
(b) un ou plusieurs capteurs (6) adaptés pour détecter un des suivants : pression de fluide ou débit de fluide, ou les deux, à l'un ou plusieurs emplacements de détection dans le réseau de canalisations (8), et générer un signal tributaire du temps, indicatif d'un de la pression de fluide et du débit de fluide, ou des deux, à l'emplacement de détection du capteur (6) ; et
(c) un processeur (12) configuré pour analyser le signal généré par un ou plusieurs des capteurs (6), et identifier les emplacements du repère de l'origine des signaux détectés par chacun de l'un ou plusieurs des capteurs (6) pour déterminer un du débit initial du fluide et de la pression initiale du fluide, ou les deux, à l'un ou plusieurs des emplacements du repère.

2. Système selon la revendication 1, l'un ou plusieurs des repères (4) comprenant une électrovanne (24) et un processeur (26) assurant la régulation de l'électrovanne selon une configuration prédéterminée.

3. Système selon la revendication 1, l'un ou plusieurs des repères (4) comprenant une roue a aubes (36) dotée d'une pluralité d'aubes (40) s'étendant depuis un axe, et un cliquet (46) engageant chaque aube (40) lorsque l'aube (40) dépasse le cliquet (46).

4. Système selon la revendication 1, l'un ou plusieurs des repères (4) comprenant un piston sollicité par un ressort à l'intérieur d'un logement, le piston exécutant un mouvement alternatif entraîné par le débit ou la pression du fluide.

5. Système selon la revendication 1, le processeur (12) comprenant une mémoire stockant un identifiant de la modification générée par chacun des repères (4), et le processeur (12) étant configuré en outre pour identifier un repère d'origine du signal détecté par le capteur (6).

6. Système selon la revendication 5, le processeur (12) étant configuré en outre pour déconvolutionner le signal détecté par le capteur (6) en deux ou plusieurs signaux fondamentaux, chaque signal fondamental étant généré par un repère (4) divers.

7. Système selon la revendication 1, le processeur (12) étant configuré en outre pour contrôler le débit à l'un ou plusieurs des repères (4) au cours d'une période.

8. Méthode de détermination d'un débit dans un réseau de canalisations de fluide, comprenant :
(a) la mise en place de deux ou plusieurs repères (6) adaptés pour être installés dans différents emplacements de repère le long du réseau de canalisations, chacun desdits deux ou plusieurs repères étant activé par un des suivants :
i) une source d'énergie intégrale ;
ii) une pression de fluide dans le réseau de canalisations ;
iii) un débit de fluide dans le réseau de canalisations ;
(b) la génération d'une modification dans un débit initial du fluide et une pression initiale du fluide, ou les deux, aux différents emplacements de marquage dans le réseau de canalisations, comprenant la modification diverse dans l'un du débit initial du fluide et de la pression initiale du fluide, ou des deux, aux différents emplacements de marquage, la modification générée dans le débit ou la pression initiaux du fluide étant sélectionnée parmi une onde modulée en fréquence, une onde modulée en amplitude, ou une onde modulée en phase ;
(c) la détection d'une pression du fluide ou d'un débit du fluide, ou des deux, à l'un ou plusieurs emplacements de détection dans le réseau de canalisations, avec au moins un ou plusieurs capteurs (6), et générant un signal tributaire du temps, indicatif d'un de la pression de fluide et du débit de fluide, ou des deux, à l'emplacement de détection du capteur ; et
(d) l'analyse du signal généré par l'un ou plusieurs des capteurs, l'identification des emplacements de repères de l'origine des signaux détectés par chacun de l'un ou plusieurs des capteurs, et la détermination de l'un du débit initial du fluide et de la pression initiale du fluide, ou des deux, aux emplacements de marquage.

9. Méthode selon la revendication 8, comprenant la génération d'une modification dans l'un d'un débit initial du fluide et d'une pression initiale du fluide, ou des deux, à deux ou plusieurs emplacements de marquage, une modification diverse dans un du débit initial du fluide et de la pression initiale du fluide, ou des deux, étant générée aux différents emplacements de marquage.

10. Méthode selon la revendication 9, comprenant en outre l'identification de l'emplacement d'un repère de l'origine d'un signal détecté par un capteur.

11. Méthode selon la revendication 10, comprenant en outre la déconvolution d'un signal détecté dans deux ou plusieurs signaux fondamentaux, le signal fondamental provenant d'un emplacement de repère divers.

12. Méthode selon la revendication 11, comprenant en outre le contrôle d'un débit à un ou plusieurs repères au cours d'une période, et le calcul d'une consommation de fluide à chaque repère au cours de la période.
